Europäisches Patentamt

European Patent Office

Office européen des brevets

(19)

(11) Publication number: **0 098 132**
**B1**

# EUROPEAN PATENT SPECIFICATION

(12)

(45) Date of publication of patent specification: 03.12.86

(51) Int. Cl.⁴: **F 16 C 1/14**

(21) Application number: **83303683.3**

(22) Date of filing: **27.06.83**

(54) **Moulded terminal with vibration dampener pocket.**

(30) Priority: **28.06.82 US 392383**

(43) Date of publication of application:
**11.01.84 Bulletin 84/02**

(45) Publication of the grant of the patent:
**03.12.86 Bulletin 86/49**

(84) Designated Contracting States:
**AT BE CH DE FR GB IT LI LU NL SE**

(56) References cited:
**EP-A-0 042 721**
**DE-A-2 730 184**
**FR-A- 839 739**
**FR-A-2 228 172**
**FR-A-2 266 064**
**US-A-2 690 919**
**US-A-3 843 216**
**US-A-4 327 600**

(73) Proprietor: **TELEFLEX INCORPORATED**
**155 S. Limerick Road**
**Limerick Pennsylvania 19468 (US)**

(72) Inventor: **Walston, Holly**
**4155 Bramford Road**
**Utica Michigan 48087 (US)**
Inventor: **Spease, Arthur L.**
**15456 Fairlane Street**
**Livonia Michigan 48154 (US)**

(74) Representative: **Meeks, Frank Burton et al**
**Urquhart-Dykes & Lord 47 Marylebone Lane**
**London W1M 6DL (GB)**

Courier Press, Leamington Spa, England.

## Description

Technical Field

This invention relates to a motion transmitting remote control assembly for transmitting motion in a curved path.

Background Art

Push-pull motion transmitting remote control assemblies are well suited as actuators for such uses as with brake and transmission assemblies. The motion transmitting remote control assemblies generally include a flexible core element supported for linear movement within a conduit. A terminal member is mounted on the end portion of the core element to interconnect the core element to a control member such as a lever. Noise isolation between the core element and lever is often required to prevent the transduction of vibrations and the resulting noise. Presently, terminal members are used which are integral members molded onto the end portion of the core element. For example, the United States Patent 4,327,600 to Bennett discloses a push-pull assembly including a terminal member having a resilient member disposed in the passageway thereof for cushioning the control member for preventing the transmission of vibration between the control member and the core element. The invention of this Bennett patent is well suited for supporting a rod member extending therethrough. The instant invention provides a terminal member including vibration dampening means adapted for supporting and retaining a ball pin therewithin rather than a rod, the ball pin extending from a body portion of a projection connected to or integrally extending from a control member.

Statement of Invention

According to the present invention, there is provided a motion transmitting remote control assembly for transmitting motion in a curved path including guide means and core means movably supported by the guide means and extending therefrom to provide a variable extending length of the core means between the guide means and one end thereof to define a line of force. An integral terminal member operatively interconnects the extending length of the core means and a control member and has an opening therethrough defining an axis which is perpendicular relative to the line of force. The opening receives a part of the control member and is provided with resilient vibration dampening means. The assembly is characterized by the terminal member being molded round the dampening means to locate and secure the dampening means. The vibration dampening means defines a retaining pocket and the control member includes a ball pin extending therefrom. The retaining pocket includes a cylindrical wall and an annular integral lip extending into said opening from said vibration dampening means for engaging and retaining the ball pin extending from the control member within said cylindrical wall.

Figures in the Drawings

Other advantages of the present invention will be readily appreciated as the same becomes better understood by reference to the following detailed description when considered in connection with the accompanying drawings wherein:

FIGURE 1 is a schematic elevational view of a motion transmitting remote control assembly constructed in accordance with the instant invention;

FIGURE 2 is an enlarged fragmentary plan view of a terminal member of the instant invention;

FIGURE 3 is a cross-sectional view taken substantially along lines 3—3 of Figure 2; and

FIGURE 4 is a cross-sectional view taken substantially along lines 4—4 of Figure 2.

Detailed Description of the Drawings

Referring to the drawings, a motion transmitting remote control assembly for transmitting motion in a curved path is generally shown at 10.

The assembly 10 includes guide means generally indicated at 12, the guide means 12 including a flexible conduit (not shown) connected to a tube member 14. The tube member 14 is generally connected to the flexible conduit by a swivel joint to allow for swivelling movement of the tube member 14 relative to the conduit. A wiper member 16 is mounted on the end portion of the tube member 14. The assembly 10 further includes core means comprising a flexible core element supported within the conduit and having a rod member 18 fixedly secured to the end of the flexible core element and disposed within the tube member 14 and extending therefrom to provide a variable extending length of the rod member 18 between the tube member 14 and one end 20 of the rod member 18. The rod member 18 defines a line of force as the rod member 18 is actuated to move into and out of the tube member 14. The wiper member 16 engages the rod member 18 to prevent foreign particulate matter from entering the tube member 14.

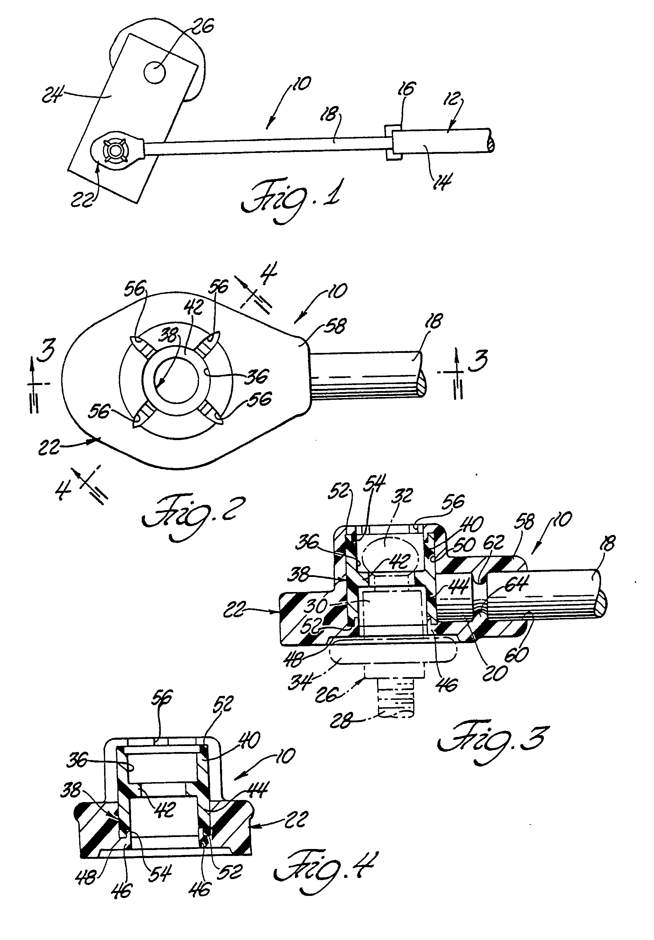

The assembly 10 further includes an integral terminal member generally indicated at 22 for operatively interconnecting the extending length of the rod member 18 and a control member 24. The control member 24 may take the form of a lever 24 supported upon a rotatable actuating shaft 26 whereby, upon longitudinal movement of the rod member 18 along the line of force defined thereby, the lever 24 will be rotated which, in turn, rotates the actuating shaft 26. The terminal member 22 is pivotally mounted upon a projection, generally indicated at 26, and shown in phantom Figure 3. The projection 26 may be an integral projection extending from the lever 24 or the projection 26 may include a threaded portion 28 to be threadedly connected to a threaded bore in the lever 24. The projection 26 includes a body portion 30 and a ball pin 32 extending therefrom. A flange 34 extends outwardly from the body portion 30.

The terminal member 22 has an opening 36 therethrough defining an axis which is perpendicular relative to the line of force defined by the rod member 18. When the terminal member 22 is mounted on the projection 26, the axis defined by the opening 36 is substantially parallel to the axis of rotation of the actuating shaft 26. As the rod member 18 is moved into and out of the tube member 14, the terminal member 22 pivots about the ball pin 32 as the lever 24 is pivotted about the axes of rotation defined by the actuating shaft 26 so as to rotate the actuating shaft 26.

The assembly 10 is characterized by the terminal member 22 being molded round resilient vibration dampening means, generally indicated at 38. The vibration dampening means 38 is a resilient vibration dampening member 38, the terminal member 22 being an organic polymeric material which is molded about the vibration dampening member 38 so as to totally encapsulate it therein. The vibration dampening member 38 defines a portion of the opening 36 and includes a retaining pocket for retaining the ball pin 32 of the projection 26 extending from the lever 24 therein. More specifically, the retaining pocket includes a cylindrical wall 40 and an annular integral lip 42 extending into the opening 36 from the vibration dampening member 38 for engaging and retaining the ball pin 32 extending from the projection 26 within the cylindrical wall 40. By providing a resilient retaining rib 42 and encapsulating the ball pin 32 within the resilient cylindrical wall 40 of the vibration dampening member 38, vibrations transmitted to the ball pin 32 are effectively isolated and absorbed by the vibration dampening member 38. Thusly, the vibration dampening means 38 of the instant invention retains the ball pin 32 within the terminal member 22 and isolates vibrations emanating from the ball pin 32 from the terminal member 22 as well as vibrations emanating from the terminal member 22 being isolated from the ball pin 32.

The terminal member 22 includes containing means for containing the body portion 30 of the projection 26 of the lever 24. The vibration dampening member 38 includes a containing pocket extending from the lip 42 and away from the retaining pocket, the containing pocket including an integral cylindrical wall 44. The terminal member 22 includes an annular flange portion 46 extending about the end portion of the cylindrical wall 44 and, accordingly, the containing pocket, so as to define a remaining portion of the containing means continuous with the inner surface of the cylindrical wall 44. The cylindrical wall 44 and the flange portion 46 form a substantially cylindrical pocket for containing the cylindrical body portion 30 of the projection 26 extending from the lever 24. Alternatively, the cylindrical wall 44 and flange portion 46 may be of various configurations so as to be adapted to contain body portions 30 of projections 26 having various configurations. The body portion 30 is subjected to the lateral forces along the line of force during actuation of the assembly 10 and spares the ball pin 32 from being subjected to these forces. Hence, the instant invention provides a strong structural terminal 22 which also isolates vibrations transmitted thereto.

The terminal member 22 further includes abutment means for abutting the flange 34 extending outwardly from the body portion 30 of the projection 26 to limit the insertion of the body portion 30 into the opening 36. The abutment means includes a recessed shoulder portion 48 extending outwardly along the outer surface of the annular flange portion 46 of the terminal member 22 for abutting against the flange 34 of the projection 26. The shoulder portion 48 limits the insertion of the body portion 30 so that the ball pin 32 may pass through the retaining lips 42 but the body portion 30 of the projection 26 is retained within the containing means defined by the cylindrical wall 44 and flange portion 46.

The terminal member 22 includes an annular wall 50 about the opening 36, the vibration dampening member 38 being disposed within the wall 50 and having a peripheral edge 52 at each end thereof. The terminal member 22 includes an annular ridge 54 which is hook-shaped when viewed in cross section, as shown in Figures 3 and 4 and defines the flange portion 46 of the containing means. The annular ridge 54 encapsulates each of the peripheral edges 52 of the vibration dampening member 38 so as to encapsulate the vibration dampening member 38 within the terminal member 22.

The terminal member 22 includes a plurality of slots 56 therethrough extending radially from the axis defined by the opening 36 about the retaining pocket of the opening 36. The slots 56 extend from the axis defined by the opening 36 at an angle relative to the line of force defined by the rod member 18, the angle being an acute angle relative to the line of force. More specifically, the terminal member 22 includes four slots 56, each of the slots 56 being disposed at an angle of 45° relative to the line of force. The slots provide flexibility to the retaining pocket about the vibration dampening member 38.

The terminal member 22 includes a neck portion 58 having a bore 60 extending radially relative to the opening 36 and parallel to the line of force defined by the rod member 18. As shown in Figure 3, the end portion 20 of the rod member 18 is disposed within the bore 60. The end portion 20 of the rod member 18 includes an annular recessed portion 62. The neck portion 58 of the terminal member 22 includes an annular projection 64 extending into the bore 60 so as to engage the annular recess 62 thereby retaining the end portion 20 of the rod member 18 within the bore 60.

The bore 60 extends through the neck portion 58 and the wall 50. The end portion 20 of the rod member 18 is disposed within the bore 60 so that the end portion 20 abuts the vibration dampening member 38 within the bore 60. During the molding process of the terminal member 22, the vibration dampening member 38 is positioned on webs or vanes within a mold cavity of the forming molds, the rod member 18 being inserted into the mold so that the end portion 20 of the rod member 18 abuts against the vibration dampening member 38 thereby properly positioning the rod member 18 relative to the vibration dampening member 38. An organic polymeric material is then injected into the mold cavity so as to encapsulate the vibration dampening member 38 and the end portion 20 of the rod member 18 within the terminal member 22. The webs support the vibration dampening member 38 and form the slots 56.

The invention has been described in an illustrative manner and it is to be understood that the terminology which has been used is intended to be in the nature of words of description rather than of limitation.

**Claims**

1. A motion transmitting remote control assembly (10) for transmitting motion in a curved path, said assembly (10) comrising: guide means (12); core means (18) movably supported by said guide means (12) and extending therefrom to provide a variable extending length of said core means (18) between said guide means (12) and one end (20) thereof to define a line of force; and an integral terminal member (22) for operatively interconnecting said extending length of said core means (18) and a control member (24) and having an opening (36) therethrough defining an axis being perpendicular relative to said line of force, the opening receiving a part of the control member and being provided with resilient vibration dampening means, characterized by said terminal member being molded round the dampening means (38) to locate and secure the dampening means; said dampening means defining a retaining pocket, and the control member (24) including a ball pin (32) extending therefrom whereby said retaining pocket includes a cylindrical wall (40) and an annular integral lip (42) extending into said opening (36) from said vibration dampening means (38) for engaging and retaining the ball pin (32) extending from the control member (24) within said cylindrical wall (40).

2. An assembly as set forth in claim 1 wherein the control member (24) includes a body portion (30) further characterized by said terminal member (22) including containing means for containing the body portion (30) of the control member (24).

3. An assembly as set forth in claim 2 further characterized by said vibration dampening means (38) including a containing pocket extending from said lip (42) and away from said retaining pocket defining an internal portion of said containing means, said terminal member (22) including an annular flanged portion (46) extending about said containing pocket defining the remaining portion of said containing means contiguous with said containing pocket.

4. An assembly as set forth in claim 3 further characterized by said containing pocket and said flanged portion (46) forming a substantially cylindrical pocket for containing the cylindrical body portion (30) of the control member (24).

5. An assembly as set forth in claim 3 wherein the control member (24) includes a flange (34) extending outwardly from the body portion (30) thereof further characterized by said terminal member (22) including abutment means for abutting said flange (34) to limit the insertion of the body portion (30) into said opening (36).

6. An assembly as set forth in claim 5 further characterized by said annular flanged portion (46) of said terminal member (22) including a recessed shoulder portion (48) for abutting against the flange (34) of the control member (26).

7. An assembly as set forth in claim 6 further characterized by said terminal member (22) including an annular wall (50) about said opening (36), said vibration dampening means (38) being disposed within said wall (50) and having a peripheral edge (52) at each end thereof said terminal member (22) including at each end of the said opening an annular ridge (54) being hook-shaped when viewed in cross section and enclosing respective ones of said peripheral edges (52) of said vibration dampening means (38).

8. An assembly as set forth in claim 1 further characterized by said terminal member (22) including a plurality of slots (56) therethrough extending radially from said axis defined by said opening (36) about said retaining pocket of said opening (36).

9. An assembly as set forth in claim 8 further characterized by each of said slots (56) extending from said axis at an angle relative to said line of force.

10. An assembly as set forth in claim 9 further characterized by each of said slots (56) being disposed at an acute angle relative to said line of force.

11. An assembly as set forth in claim 10 further characterized by said terminal member (22) including four of said slots (56), each of said slots (56) being disposed at an angle of 45° relative to said line of force.

12. An assembly as set forth in claim 1 further characterized by said terminal member 22 including a neck portion (58) having a bore (60) extending radially relative to said opening (36) and parallel to said line of force, said extended length having an end portion (20) of said core means (18) disposed within said bore (60).

13. An assembly as set forth in claim 12 further characterized by said bore (60) extending through said neck portion (58) to said vibration dampening means (38), said core means (18) including a rod member (18) defining said extending portion and including said end portion (20) thereof, said end portion (20) of said rod member (18) abutting said vibration dampening means (38) within said bore (60).

14. An assembly as set forth in claim 1 further characterized by said terminal member (22) being made of an organic polymeric material.

## Patentansprüche

1. Bewegungsübertragungs-Fernsteuer-anordnung (10) zur Übertragung einer Bewegung auf einer gekrümmten Bahn, wobei die Anordnung (10) folgendes aufweist: Eine Führungseinrichtung (12); ein Kernelement (18), das von der Führungseinrichtung (12) beweglich gelagert ist und sich von dieser ausgehend erstreckt, um eine variable ausgedehnte Länge des Kernelementes (18) zwischen der Führungseinrichtung (12) und seinem einen Ende (20) unter Ausbildung einer Kraftlinie zu bilden; und ein integrales Endteil (22) zur betriebsmäßigen Verbindung der ausgedehnten Länge des Kernelementes (18) und eines Steuerteiles (24), wobei es eine hindurchgehende Öffnung (36) aufweist, die eine Achse senkrecht in bezug auf die Kraftlinie bildet, wobei die Öffnung ein Teil des Steuerteiles aufnimmt und mit elastischen Schwingungsdämpfungseinrichtungen versehen ist, dadurch gekennzeichnet, daß das Endteil (22) um die Dämpfungseinrichtung (38) herum geformt ist, um die Dämpfungseinrichtung zu lokalisieren und zu befestigen, wobei die Dämpfungseinrichtung eine Halteausnehmung bildet, und daß das Steuerteil (24) einen Kugelstift (32) aufweist, der sich von diesem erstreckt, so daß die Halteausnehmung eine zylindrische Wand (40) und eine ringförmige integrale Lippe (42) aufweist, die sich von der Schwingungsdämpfungseinrichtung (38) in die Öffnung (36) erstreckt, um den Kugelstift (32) zu erfassen und zu halten, der sich von dem Steuerteil (24) innerhalb der zylindrischen Wand (40) erstreckt.

2. Anordnung nach Anspruch 1, wobei das Steuerteil (24) einen Körper (30) aufweist, dadurch gekennzeichnet, daß das Endteil (22) eine Aufnahmeeinrichtung besitzt, um den Körper (30) des Steuerteils (24) aufzunehmen.

3. Anordnung nach Anspruch 2, dadurch gekennzeichnet, daß die Schwingungsdämpfungseinrichtung (38) eine Aufnahmeausnehmung aufweist, die sich von der Lippe (42) aus und von der Halteausnehmung weg erstreckt, die einen inneren Bereich der Aufnahmeeinrichtung bildet, wobei das Endteil (22) ein ringförmiges Flanschteil (46) aufweist, das sich um die Aufnahmeausnehmung erstreckt, welche den übrigen Bereich der Aufnahmeeinrichtung angrenzend an die Aufnahmeausnehmung bildet.

4. Anordnung nach Anspruch 3, dadurch gekennzeichnet, daß die Aufnahmeausnehmung und das Flanschteil (46) eine im wesentlichen zylindrische Aufnehmung bilden, um den zylindrischen Körper (30) des Steuerteiles (24) aufzunehmen.

5. Anordnung nach Anspruch 3, wobei das Steuerteil (24) einen Flansch (34) aufweist, der sich von dem Körper (30) nach außen erstreckt, dadurch gekennzeichnet, daß das Endteil (22) ein Widerlager aufweist aufweist, gegen das der Flansch (34) anliegt, um das Einsetzen des Körpers (30) in die Öffnung (36) zu begrenzen.

6. Anordnung nach Anspruch 5, dadurch gekennzeichnet, daß das ringförmige Flanschteil (46) des Endteiles (22) ein ausgespartes Schulterteil (48) aufweist, das gegen den Flansch (34) des Steuerteiles (26) anliegt.

7. Anordnung nach Anspruch 6, dadurch gekennzeichnet, daß das Endteil (22) eine ringförmige Wand (50) um die Öffnung (36) aufweist, wobei die Schwingungsdämpfungseinrichtung (28) innerhalb der Wand (50) angeordnet ist und eine Umfangskante (52) an ihrem jeweiligen Ende besitzt, wobei das Endteil (22) an jedem Ende der Öffnung einen ringförmigen Steg (54) aufweist, der im Querschnitt hakenförmig ausgebildet ist und die jeweiligen Umfangskanten (52) der Schwingungsdämpfungseinrichtungen (38) umfaßt.

8. Anordnung nach Anspruch 1, dadurch gekennzeichnet, daß das Endteil (22) eine Vielzahl von hindurchgehenden Schlitzen (56) aufweist, die sich in radialer Richtung von der Achse erstrecken, die von der Öffnung (36) um die Halteausnehmung der Öffnung (36) gebildet wird.

9. Anordnung nach Anspruch 8, dadurch gekennzeichnet, daß jeder der Schlitze (56) sich von der Achse unter einem Winkel relativ zu der Kraftlinie erstreckt.

10. Anordnung nach Anspruch 9, dadurch gekennzeichnet, daß jeder der Schlitze (56) unter einem spitzen Winkel relativ zu der Kraftlinie angeordnet ist.

11. Anordnung nach Anspruch 10, dadurch gekennzeichnet, daß das Endteil (22) vier Schlitze (56) aufweist, wobei jeder der Schlitze (56) unter einem Winkel von 45° relativ zu der Kraftlinie angeordnet ist.

12. Anordnung nach Anspruch 1, dadurch gekennzeichnet, daß das Endteil (22) ein Halsteil (58) mit einer Bohrung (60) aufweist, die sich in radialer Richtung relativ zu der Öffnung (36) und parallel zu der Kraftlinie erstreckt, wobei die ausgedehnte Länge einen Endbereich (20) des Kernelementes (18) besitzt, der in der Bohrung (60) angeordnet ist.

13. Anordnung nach Anspruch 12, dadurch gekennzeichnet, daß die Bohrung (60) sich durch das Halsteil (58) zu der Schwingungsdämpfungseinrichtung (38) erstreckt, daß das Kernelement (18) ein Stangenteil (18) aufweist, welches das ausgedehnte Teil bildet und den Endbereich (20) enthält, und daß der Endbereich (20) des Stangenteiles (18) gegen die Schwingungsdämpfungseinrichtung (38) innerhalb der Bohrung (60) anliegt.

14. Anordnung nach Anspruch 1, dadurch gekennzeichnet, daß das Endteil (22) aus einem organischen polymeren Material besteht.

## Revendications

1. Dispositif (10) de commande à distance à transmission de mouvement pour transmettre un mouvement suivant un chemin courbe, ce dispositif (10) comprenant: des moyens de guidage (12); une âme (18) supportée de façon mobile par ces moyens de guidage (12) et s'étendant à l'extérieur de ceux-ci de manière à former une longueur sortante variable de l'âme (18) entre les moyens de guidage (12) et une extrémité (20) de l'âme, pour définir une ligne de force; et un embout solidaire (22), pour interconnecter fonctionnellement ladite longueur sortante de l'âme (18) et un organe de manoeuvre (24), comportant une cavité traversante (36) qui définit un axe perpendiculaire à ladite ligne de force, la cavité recevant une partie de l'organe de manoeuvre et contenant des moyens élastiques d'amortissement de vibrations, caractérisé en ce que l'embout (22) est moulé autour des moyens (38) d'amortissement de vibrations de manière à définir la position et à fixer les moyens d'amortissement, ces moyens d'amortissement définissant une emboîtement de retenue, et l'organe de manoeuvre (24) comportant un téton à boule (32) qui part de l'organe de commande, de sorte que l'emboîtement de retenue comporte une paroi cylindrique (40) et une lèvre annulaire solidaire (42) dirigée vers l'intérieur de la cavité (36) des moyens (38) d'amortissement de vibrations pour engager et retenir le téton à boule (32) partant de l'organe de manoeuvre (24) à l'intérieur de la dite paroi cylindrique (40).

2. Dispositif suivant la revendication 1, dans lequel l'organe de manoeuvre (24) comprend un corps (30), caractérisé en outre en ce que l'embout (22) comporte des moyens de réception pour le logement du corps (30) de l'organe de manoeuvre (24).

3. Dispositif suivant la revendication 2, caractérisé en outre en ce que les moyens (38) d'amortissement de vibrations comportent un logement partant de la lèvre (42) et à l'opposé de l'emboîtement de retenue, de manière à définir une partie intérieure des moyens de réception, l'embout (22) comportant une collerette annulaire (46) qui s'étend autour dudit logement de manière à définir la partie restante des moyens de réception en continuité avec ledit logement.

4. Dispositif suivant la revendication 3, caractérisé en outre en ce que le logement et la collerette (46) constituent une cavité sensiblement cylindrique pour recevoir le corps cylindrique (30) de l'organe de manoeuvre (24).

5. Dispositif suivant la revendication 3, dans lequel l'organe de manoeuvre (24) comporte une bride (34) dirigée vers l'extérieur à partir de son corps (30), caractérisé en outre en ce que l'embout (22) comporte des moyens de butée pour arrêter ladite bride (34), de manière à limiter l'insertion du corps (30) dans ladite cavité (36).

6. Dispositif suivant la revendication 5, caractérisé en outre en ce que la collerette annulaire (46) de l'embout (22) comporte une partie épaulée en retrait (48) venant en butée contre la bride (34) de l'organe de manoeuvre (26).

7. Dispositif suivant la revendication 6, caractérisé en outre en ce que l'embout (22) comporte une paroi annulaire (50) autour de la cavité (36), les moyens (38) d'amortissement de vibrations étant disposés à l'intérieur de cette paroi (50), et comportant un bord périphérique (52) à chaque extrémité, l'embout (22) comportant à chaque extrémité de ladite cavité un rebord annulaire (54), en forme de crochet en section transversale, qui emprisonne un bord respectif des dits bords périphériques (52) des moyens (38) d'amortissement de vibrations.

8. Dispositif suivant la revendication 1, caractérisé en outre en ce que l'embout (22) comporte une pluralité de fentes traversantes (56) partant radialement de l'axe défini par ladite cavité (36), autour de l'emboîtement de retenue de cette cavité (36).

9. Dispositif suivant la revendication 8, caractérisé en outre en ce que chacune des fentes (56) s'étend à partir de l'axe, suivant un angle par rapport à ladite ligne de force.

10. Dispositif suivant la revendication 9, caractérisé en outre en ce que chacune des fentes (56) est disposée suivant un angle aigu par rapport à ladite ligne de force.

11. Dispositif suivant la revendication 10, caractérisé en outre en ce que l'embout (22) comporte quatre des dites fentes (56), chacune de ces fentes (56) étant disposée suivant un angle de 45° par rapport à ladite ligne de force.

12. Dispositif suivant la revendication 1, caractérisé en outre en ce que l'embout (22) comporte un col (58) ayant un alésage (60) qui s'étend radialement par rapport à ladite cavité (36) et parallèlement à ladite ligne de force, ladite longueur sortante comportant une partie d'extrémité (20) de l'âme (18) disposée à l'intérieur de cet alésage (60).

13. Dispositif suivant la revendication 12, caractérisé en outre en ce que l'alésage (60) traverse le col (58) jusqu'aux moyens (38) d'amortissement de vibrations, l'âme (18) comprenant une tige (18) qui définit ladite partie sortante et comporte ladite partie d'extrémité (20) de l'âme, cette partie d'extrémité (20) de la tige (18) étant en butée contre les moyens (38) d'amortissement de vibrations à l'intérieur de l'alésage (60).

14. Dispositif suivant la revendication 1, caractérisé en ce que l'embout (22) est fabriqué en un polymère organique.

Fig.1

Fig.2

Fig.3

Fig.4